# EUROPEAN PATENT SPECIFICATION

(11) **EP 4 087 722 B1**
(45) Date of publication and mention of the grant of the patent: **29.04.2026**
(21) Application number: 20923990.4
(22) Date of filing: 11.03.2020
(51) Int. Cl.: B29C 64/165, B33Y 70/10, B29C 64/357, B29C 64/314, B33Y 10/00, B33Y 40/00, C08K 5/24, B29C 64/153

(54) **THREE-DIMENSIONAL PRINTING KITS WITH DIHYDRAZIDES**
DREIDIMENSIONALE DRUCKKITS MIT DIHYDRAZIDEN
KITS D'IMPRESSION EN TROIS DIMENSIONS COMPRENANT DES DIHYDRAZIDES

(43) Date of publication of application: 16.11.2022
(73) Proprietor: Peridot Print LLC, Palo Alto, CA 94304 (US)
(72) Inventor: DISCEKICI, Emre Hiro, San Diego, California 92127-1899 (US); WOODRUFF, Shannon Reuben, San Diego, California 92127-1899 (US); GELMAN, Mariya, San Diego, California 92127-1899 (US); TANDY, Jesiska, San Diego, California 92127-1899 (US); YEMANE, Alay, San Diego, California 92127-1899 (US)
(74) Representative: Haseltine Lake Kempner LLP
(86) International application number: PCT/US2020/021948
(87) International publication number: WO 2021/183116

(56) References cited:
- EP-A1- 3 616 869
- WO-A1-2018/106237
- WO-A1-2019/182568
- WO-A1-2020/018131
- JP-B2- 5 694 880
- US-A1- 2019 047 216

## Description

### BACKGROUND

Three-dimensional (3D) printing may be an additive printing process used to make three-dimensional solid parts from a digital model. Three-dimensional printing is often used in rapid product prototyping, mold generation, mold master generation, and short run manufacturing. Some three-dimensional printing techniques can be considered additive processes because they involve the application of successive layers of material. This can be unlike other machining processes, which often rely upon the removal of material to create the final part. WO 2019/182568 A1 describes a composition for printing a three-dimensional object comprising composite particles comprising a thermoplastic 5 polymer and a colour-masking pigment. EP 3616869 A1 describes a resin powder containing a resin, wherein the proportion of fine powder having a number diameter of 40 percent or less of a mean number diameter Mn of the resin powder is 30 percent or less in the resin powder.

### BRIEF DESCRIPTION OF THE DRAWINGS

FIG. 1 is a schematic illustration of an example three-dimensional printing kit in accordance with the present disclosure;
FIG. 2 is a schematic illustration of another example three-dimensional printing kit in accordance with the present disclosure;
FIG. 3 is a flow diagram illustrating an example method of printing a three-dimensional object in accordance with the present disclosure; and
FIG. 4 is a graph depicting the results of an aging study using solution viscosity in accordance with an example of the present disclosure.

### DETAILED DESCRIPTION

The present invention is defined in and by the appended claims. Three-dimensional printing can be an additive process involving the application of successive layers of a polymeric build material with a fusing agent printed thereon to bind the successive layers of the polymeric build material together. More specifically, a fusing agent including a radiation absorber can be selectively applied to a layer of a polymeric build material on a support bed, e.g., a build platform supporting polymeric build material, to pattern a selected region of a layer of the polymeric build material. The layer of the polymeric build material can be exposed to electromagnetic radiation, and due to the presence of the radiation absorber on the printed portions, absorbed light energy at those portions of the layer having the fusing agent printed thereon can be converted to thermal energy, causing that portion to melt or coalesce, while other portions of the polymeric build material do reach temperatures suitable to melt or coalesce. This can then be repeated on a layer-by-layer basis until the three-dimensional object is formed.

In accordance with this, a three-dimensional printing kit includes a polymeric build material including from about 80 wt% to 100 wt% polymer particles having an average particle size from about 10 µm to about 150 µm and from about 0.01 wt% to about 2 wt% dihydrazide, wherein the average particle size is measured using a particle analyzer using laser diffraction; and a fusing agent formulation including an aqueous liquid vehicle and a radiation absorber. In an example, the polymeric build material can include polyamide, polyethylene, polyethylene terephthalate (PET), polystyrene, polyacrylate, polyacetal, polypropylene, polycarbonate, polyester, acrylonitrile butadiene styrene, thermoplastic polyamide, thermoplastic polyurethane, engineering plastic, polyether ketone, polyetheretherketone (PEEK), polyethylene terephthalate, polybutylene terephthalate, polymer blends thereof, amorphous polymers thereof, core-shell polymers thereof, and copolymers thereof. In another example, the dihydrazide can be selected from adipic acid dihydrazide, sebacic acid dihydrazide, succinic dihydrazide, valine dihydrazide, dodecanedioic dihydrazide, isophthalic dihydrazide, carbohydrazide, icosanedioic acid dihydrazide, oxalyl dihydrazide, azelaic dihydrazide, terephthalic dihydrazide, or a combination thereof. In yet another example, the dihydrazide can be adipic acid dihydrazide. In a further example, the dihydrazide can be present at from about 0.05 wt% to about 0.5 wt% in the polymeric build material. In one example, the fusing agent can include about 60 wt% to about 94 wt% water, from about 5 wt% to about 35 wt% organic co-solvent, and from about 1 wt% to about 20 wt% radiation absorber, based on a total weight of the fusing agent. In another example, the three-dimensional printing kit can further include a detailing agent, wherein the detailing agent includes a detailing compound to reduce a temperature of the polymeric build material onto which the detailing agent is applied.

In another example of the present disclosure, a three-dimensional printing kit for use in a method of three-dimensional printing a three-dimensional object according to the present invention includes a polymeric build material including from about 80 wt% to 100 wt% polymer particles having an average particle size from about 10 µm to about 150 µm, wherein the average particle size is measured using a particle analyzer using laser diffraction; a fusing agent formulation including an aqueous liquid vehicle and a radiation absorber; and a fluid recycling agent including from about 0.5 wt% to about 10 wt% dihydrazide in an aqueous liquid vehicle. In one example, the dihydrazide can be selected from adipic acid dihydrazide, sebacic acid dihydrazide, succinic dihydrazide, valine dihydrazide, dodecanedioic dihydrazide, isophthalic dihydrazide, carbohydrazide, icosanedioic acid dihydrazide, oxalyl dihydrazide, azelaic dihydrazide, terephthalic dihydrazide, or a combination thereof. In another example, the aqueous liquid vehicle of the fluid recycling agent can include from about 60 wt% to about 94 wt% water, from about 4 wt% to about 40 wt% organic co-solvent, and from about 0.01 wt% to about 2 wt% surfactant.

In another example of the present disclosure, a method of three-dimensional printing a three-dimensional object (or "method") includes admixing from about 3 wt% to about 20 wt% fresh polymeric build material with a used polymeric build material to generate refreshed polymeric build material. The used polymeric build material includes from about 0.05 wt% to about 0.5 wt% dihydrazide. The method further includes, based on a three-dimensional object model, selectively fusing portions of individual layers of the refreshed polymeric build material to form a three-dimensional object. In one example, the dihydrazide can be added to the used polymeric build material by dry blending the dihydrazide therewith. In another example, the dihydrazide can be added to the used polymeric build material by applying a fluid recycling agent containing the dihydrazide therewith. In yet another example, the dihydrazide can be selected from adipic acid dihydrazide, sebacic acid dihydrazide, succinic dihydrazide, valine dihydrazide, dodecanedioic dihydrazide, isophthalic dihydrazide, carbohydrazide, icosanedioic acid dihydrazide, oxalyl dihydrazide, azelaic dihydrazide, terephthalic dihydrazide, or a combination thereof. In a further example, from about 3 wt% to about 10 wt% fresh polymeric build material can be admixed with the used polymeric build material.

When discussing the three-dimensional printing kits or the method of printing a three-dimensional object herein, these discussions can be considered applicable to one another whether or not they are explicitly discussed in the context of that example. Thus, for example, when discussing a polymeric build material related to a three-dimensional printing kit, such disclosure is also relevant to and directly supported in the context of the other three-dimensional printing kit, the method of printing a three-dimensional object, and *vice versa.*

Terms used herein will have the ordinary meaning in their technical field unless specified otherwise. In some instances, there are terms defined more specifically throughout the specification or included at the end of the present specification, and thus, these terms can have a meaning as described herein.

### Three-Dimensional Printing Kits

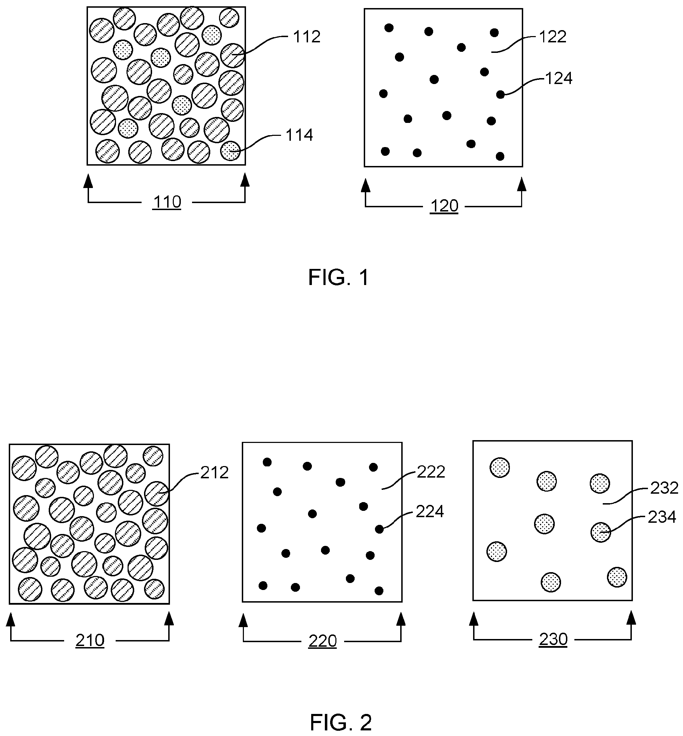

A three-dimensional printing kit 100 is shown by way of example in FIG. 1. The three-dimensional printing kit includes a polymeric build material 110 and a fusing agent 120. The polymeric build material includes from about 80 wt% to 100 wt% polymer particles 112 that have an average particle size from about 10 µm to about 150 µm and from about 0.01 wt% to about 2 wt% dihydrazide 114, wherein the average particle size is measured using a particle analyzer using laser diffraction. The fusing agent includes an aqueous liquid vehicle 122 and a radiation absorber 124.

In another example, a three-dimensional printing kit 200 for use in a method of three-dimensional printing a three-dimensional object according to the present invention includes a polymeric build material 210, a fusing agent 220, and a fluid recycling agent 230. See FIG. 2. The polymeric build material includes from about 80 wt% to 100 wt% polymer particles 212 that have an average particle size from about 10 µm to about 150 µm, wherein the average particle size is measured using a particle analyzer using laser diffraction. The fusing agent includes an aqueous liquid vehicle 222 and a radiation absorber 224. The fluid recycling agent includes an aqueous liquid vehicle 232 and from about 0.5 wt% to about 10 wt% dihydrazide 234.

In some examples, the three-dimensional printing kit(s) can further include other fluids, such as coloring agents, detailing agents, or the like. A detailing agent, for example, can include a detailing compound, which can be a compound that can reduce the temperature of the polymeric build material when applied thereto. In some examples, the detailing agent can be applied around edges of the application area of the fusing agent. This can prevent caking around the edges due to heat from the area where the fusing agent was applied. The detailing agent can also be applied in the same area where the fusing agent was applied in order to control the temperature and prevent excessively high temperatures when the polymeric build material is fused.

The polymeric build material may be packaged or co-packaged with the fusing agent, coloring agent, detailing agent, or the like in separate containers, and/or can be combined with the fusing agent at the time of printing, e.g., loaded together in a three-dimensional printing system.

### Methods of Printing Three-dimensional Objects

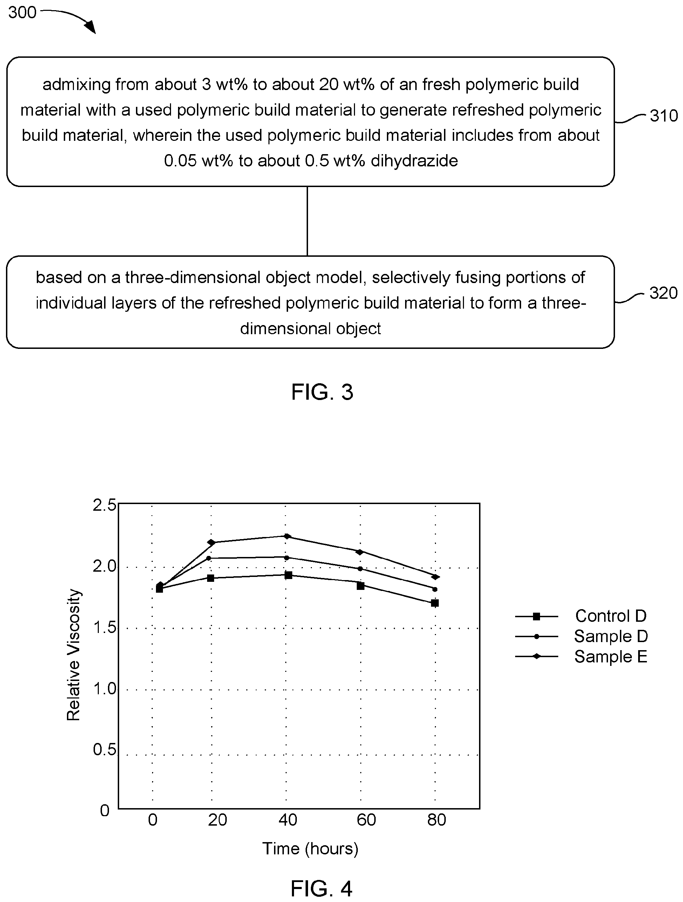

A flow diagram of a method 300 of three-dimensional (3D) printing is shown in FIG. 3. The method includes admixing 310 from about 3 wt% to about 20 wt% fresh polymeric build material with a used polymeric build material to generate refreshed polymeric build material. The used polymeric build material includes from about 0.05 wt% to about 0.5 wt% dihydrazide. As used herein, "fresh polymeric build material" indicates that a polymeric build material has not been previously used in a process for three-dimensional printing. "Used polymeric build material" indicates that a polymeric build material has been applied to a powder bed for use in a process for three-dimensional printing and was not fused with a fusing agent during the process. Used polymeric build material remains in particulate form and can be recycled for use in three-dimensional printing of another object. The method further includes, based on a three-dimensional object model, selectively fusing 320 portions of individual layers of the refreshed polymeric build material to form a three-dimensional object.

In an example, from about 3 wt% to about 20 wt% fresh polymeric build material can be admixed with from about 80 wt% to about 99.09 wt% used polymeric build material. In other examples, the fresh polymeric build material can be admixed at from about 5 wt% to about 15 wt%, from about 7 wt% to about 18 wt%, or from about 3 wt% to about 10 wt% with the used polymeric build material. The amount of fresh polymeric build material can be less than 20 wt% without any substantial degradation in the mechanical properties of the printed article therefrom, i.e. without brittle part failures. In some examples, the fresh polymeric build material to used polymeric build material can have a weight ratio of about 1:32, 1:19, 1:9, or 1:5.

In one example, the dihydrazide can be added to the used polymeric build material by dry blending the dihydrazide with the used polymeric build material. In some examples the dihydrazide can be added to the used polymeric build material at from about 0.05 wt% to about 0.5 wt%. In yet other examples, the used polymeric build material can be added to the used polymeric build material at from about 0.1 wt% to about 0.5 wt% or from about 0.08 wt% to about 0.3 wt%.

In another example, the dihydrazide can be added to the used polymeric build material by applying a fluid recycling agent including dihydrazide to the polymeric build material. In one example, the fluid recycling agent can be applied to areas outside of where the three-dimensional part is being built, as that is the polymeric build material that may ultimately be recycled. Thus, the fluid recycling agent may be applied to the powder bed generally, or alternatively, may be applied excluding areas where the three-dimensional object is being built. The fluid recycling agent can be applied by a fluid applicator. The fluid applicator can be any type of apparatus capable of selectively dispensing or applying the fluid recycling agent. For example, the fluid applicator can be a fluid ejector or digital fluid ejector, such as an inkjet printhead, e.g., a piezo-electric printhead, a thermal printhead, a continuous printhead, etc. The fluid applicator could likewise be a sprayer, a dropper, or other similar structure for applying the fluid recycling agent to the polymeric build material. The fluid recycling agent can be applied such that a weight range of the dihydrazide in the polymeric build material can be from about 0.05 wt% to about 0.5 wt, from about 0.1 wt% to about 0.5 wt%, or from about 0.08 wt% to about 0.3 wt%.

Selectively fusing portions of individual layers of the refreshed polymeric build material to form a three-dimensional object includes, iteratively applying individual polymeric build material layers of the polymeric build material, then based on a 3D object model, iteratively and selectively applying a fusing agent onto the individual polymeric build material layers, and iteratively exposing the individual polymeric build material layers with the fusing agent dispensed thereon to electromagnetic radiation to selectively fuse polymer particles of the polymeric build material in contact with the radiation absorber to form the fused three-dimensional object.

In printing in a layer-by-layer manner, the polymeric build material can be spread, the fusing agent applied, the layer of the polymeric build material can be exposed to energy, and then a build platform can then be dropped a distance of 5 µm to 1 mm, which can correspond to the thickness of a printed layer of the three-dimensional object, so that another layer of the polymeric build material can be added again thereon to receive another application of fusing agent, and so forth. During the build, the radiation absorber in the fusing agent can act to convert the energy to thermal energy and promote the transfer of thermal heat to polymer particles of the polymeric build material in contact with the fusing agent including the radiation absorber. In an example, the fusing agent can elevate the temperature of the polymer particles of the polymeric build material above the melting or softening point of the polymer particles, thereby allowing fusing (e.g., sintering, binding, curing, etc.) of the polymeric build material (or polymer particles thereof) and the formation of an individual layer of the three-dimensional object. This can be repeated until all the individual polymeric build material layers have been created and a three-dimensional object is formed. In some examples, the method can further include heating the polymeric build material prior to dispensing or applying the individual layers of the polymeric build material.

In one example, printing in a layer-by-layer manner can further include, iteratively and selectively dispensing or applying a detailing agent onto individual polymeric build material layers laterally at a border between a first area where the individual polymeric build material layer was contacted by the fusing agent and a second area where the individual polymeric build material layer was not contacted by the fusing agent. This can prevent caking around the edges due to heat from the area where the fusing agent was applied. The detailing agent can also be applied in the same area where the fusing agent was applied in order to control the temperature and prevent excessively high temperatures when the polymeric build material is fused.

### Polymeric Build Materials

The polymeric build material is used as the bulk material of the three-dimensional printed object. As mentioned, the polymeric build material includes from about 80 wt% to 100 wt% polymer particles. In another example, the polymeric build material can include from about 80 wt% to about 99.99 wt%, from about 85 wt% to about 99 wt%, from about 85 wt% to about 95 wt%, from about 90 wt% to 100 wt%, or 100 wt% polymer particles.

In an example, the polymeric build material can include polyamide, polyethylene, polyethylene terephthalate (PET), polystyrene, polyacrylate, polyacetal, polypropylene, polycarbonate, polyester, acrylonitrile butadiene styrene, thermoplastic polyamide, thermoplastic polyurethane, engineering plastic, polyether ketone, polyetheretherketone (PEEK), polyethylene terephthalate, polybutylene terephthalate, polymer blends thereof, amorphous polymers thereof, core-shell polymers thereof, and copolymers thereof. In another example, the polymeric build material can include a polyamide, polyethylene, polystyrene, polypropylene, polycarbonate, polymer blends thereof, amorphous polymers thereof, core-shell polymers thereof, and copolymers thereof. In a further example, the polymeric build material can include a polyamide.

The polymeric build material may include similarly sized polymer particles or differently sized polymer particles. The terms "size" or "particle size," as used herein, refer to the diameter of a substantially spherical particle, or the effective diameter of a non-spherical particle, e.g., the diameter of a sphere with the same mass and density as the non-spherical particle as determined by weight. Particle size information is measured using a particle analyzer such as the MASTERSIZER^{™} 3000 available from Malvern Panalytical, for example. The particle analyzer measures particle size using laser diffraction. A laser beam passes through a sample of particles and the angular variation in intensity of light scattered by the particles can be measured. Larger particles scatter light at smaller angles, while small particles scatter light at larger angles. The particle analyzer can then analyze the angular scattering data to calculate the size of the particles using the Mie theory of light scattering. The particle size can be reported as a volume equivalent sphere diameter. An average particle size can refer to a mathematical average of the particle sizes. Alternatively, the particle size can be based on a particle size distribution including a D50 particle size, where 50% of the particles are larger than the D50 value and 50% of the particles are smaller than the D50 value. The polymer particles can have an average particle size from about 10 µm to about 150 µm, from about 25 µm to about 125 µm, from about 50 µm to about 150 µm, or from about 20 µm to about 80 µm. In another example, the D50 particle size can independently be from about 10 µm to about 150 µm, from about 25 µm to about 125 µm, from about 50 µm to about 150 µm, or from about 20 µm to about 80 µm. Particle size information can also be determined and/or verified using a scanning electron microscope (SEM).

In some examples, the polymeric build material further includes from about 0.01 wt% to about 2 wt% dihydrazide. In yet other examples, the dihydrazide can be present at from about 0.05 wt% to about 0.5 wt%, from about 1 wt% to 2 wt%, or from about 0.5 wt% to 1.5 wt% in the polymeric build material. This may be the case when the polymeric build material is pre-admixed with the dihydrazide.

If a dihydrazide is included in the polymeric build material (instead of or in addition to inclusion in a fluid recycling agent), it can generally be any compound that includes two hydrazide groups. In some examples, the dihydrazide can include sulfonohydrazide groups, while in other examples, the dihydrazide can include carbohydrazide groups. In one example, the dihydrazide can be selected from adipic acid dihydrazide, sebacic acid dihydrazide, succinic dihydrazide, valine dihydrazide, dodecanedioic dihydrazide, isophthalic dihydrazide, carbohydrazide, icosanedioic acid dihydrazide, oxalyl dihydrazide, azelaic dihydrazide, terephthalic dihydrazide, or a combination thereof. In another example, the dihydrazide can be adipic acid dihydrazide.

The polymeric build material can, in some examples, further include flow additives, antioxidants, inorganic filler, or any combination thereof. Typically, an amount of any of these or other similar components can be at about 5 wt% or less. Example flow additives can include fumed silica, and/or the like. Example antioxidants can include hindered phenols, phosphites, thioethers, hindered amines, and/or the like. Example inorganic filler can include particles such as alumina, silica, fibers, carbon nanotubes, cellulose, and/or the like. Some additives may be found in multiple categories of additives, e.g., fumed silica can be a flow additive as well as a filler. In some examples, the filler or other type of additive can become embedded or composited with the polymer particles.

### Fluid Recycling Agents

In an example, the three-dimensional printing kit(s) and/or method of printing can include the presence of or use of a fluid recycling agent with from about 0.5 wt% to about 10 wt% dihydrazide in an aqueous liquid vehicle. In some examples, the dihydrazide can be present in the fluid recycling agent at from about 2 wt% to about 8 wt%, from about 0.5 wt% to about 5 wt%, from about 1 wt% to about 6 wt%, or from about 3 wt% to about 7 wt%. The polymeric build material used with the fluid recycling agent may or may not include a dihydrazide as well.

If a dihydrazide is provided as part of a fluid recycling agent, it can generally be any compound that includes two hydrazide groups. In some examples, the dihydrazide can include sulfonohydrazide groups, while in other examples, the dihydrazide can include carbohydrazide groups. In one example, the dihydrazide can be selected from adipic acid dihydrazide, sebacic acid dihydrazide, succinic dihydrazide, valine dihydrazide, dodecanedioic dihydrazide, isophthalic dihydrazide, carbohydrazide, icosanedioic acid dihydrazide, oxalyl dihydrazide, azelaic dihydrazide, terephthalic dihydrazide, or a combination thereof. In another example, the dihydrazide can be adipic acid dihydrazide.

In some examples, the dihydrazide can be a water soluble or water dispersible dihydrazide. As used herein, "water soluble" refers to materials that can be dissolved in water to form a solution that does not separate into multiple phases at a concentration from about 5 wt% to about 99 wt% of the dissolved material with respect to the entire weight of the solution. As used herein, "water-dispersible" refers to materials that can form a stable dispersion in water without settling at a concentration from about 5 wt% to about 99 wt% of the dispersed material with respect to the entire weight of the dispersion. The dispersible material can be dispersed either on its own or with a dispersant.

In some examples, the aqueous liquid vehicle can include water. In another example, the aqueous liquid vehicle can include water and an organic co-solvent. In yet another example, the aqueous liquid vehicle can include water, an organic co-solvent, and a surfactant. For example, the aqueous liquid vehicle can include from about 60 wt% to about 94 wt% water, from about 4 wt% to about 40 wt% organic co-solvent, and from about 0.01 wt% to about 2 wt% surfactant. In yet other examples, the aqueous liquid vehicle can be as described in further detail below.

### Fusing Agents

The three-dimensional printing kits and methods of printing three-dimensional objects make use of a fusing agent. The fusing agent includes an aqueous liquid vehicle and a radiation absorber to generate heat from absorbed electromagnetic radiation. The aqueous liquid vehicle can include water and an organic co-solvent as the primary solvents. In one example, the aqueous liquid vehicle can include from about 25 wt% to about 94 wt%, from about 60 wt% to about 94 wt% water, or from about 30 wt% to about 75 wt% water. The aqueous liquid vehicle can also include from about 5 wt% to about 60 wt% or from about 5 wt% to about 35 wt% organic co-solvent. In an example, the aqueous liquid vehicle can include organic-solvent to water at a ratio from about 1:3 to about 19:1, from about 1:3 to about 10:1, from about 1:2 to about 5:1, from about 1:2 to about 2:1, or from about 1:2 to about 1:1. The fusing agent may also include a dihydrazide, but in some examples, the fusing agent can exclude dihydrazide, as the dihydrazide is included in one or both of a fluid recycling agent and/or the polymeric build material.

In further detail, the fusing agent includes a radiation absorber. An amount of radiation absorber in the fusing agent can vary depending on the type of radiation absorber. In some examples, an amount of radiation absorber in the fusing agent can be from about 1 wt% to about 20 wt%. In another example, the amount can be from about 5 wt% to about 15 wt%. In yet another example, the amount can be from about 1 wt% to about 10 wt%. In a particular example, the amount can be from about 3 wt% to about 12 wt%.

Example radiation absorbers can include carbon black, a metal dithiolene complex, a near-infrared absorbing dye, a near-infrared absorbing pigment, metal nanoparticles, a conjugated polymer, or a combination thereof. In an example, the radiation absorber can be carbon black. In some examples, the radiation absorber can be colored or colorless.

Examples of near-infrared absorbing dyes can include aminium dyes, tetraaryldiamine dyes, cyanine dyes, pthalocyanine dyes, dithiolene dyes, and others. A variety of near-infrared absorbing pigments can also be used. Non-limiting examples can include phosphates having a variety of counterions such as copper, zinc, iron, magnesium, calcium, strontium, the like, and combinations thereof. Non-limiting specific examples of phosphates can include M₂P₂O₇, M₄P₂O₉, M₅P₂O₁₀, M₃(PO₄)₂, M(PO₃)₂, M₂P₄O₁₂, and combinations thereof, where M represents a counterion having an oxidation state of +2. For example, M₂P₂O₇ can include compounds such as Cu₂P₂O₇, Cu/MgP₂O₇, Cu/ZnP₂O₇, or any other suitable combination of counterions. The phosphates described herein are not limited to counterions having a +2 oxidation state. Other phosphate counterions can also be used to prepare other suitable near-infrared pigments. Additional near-infrared absorbing pigments can include silicates. Silicates can have the same or similar counterions as phosphates. One non-limiting example can include M₂SiO₄, M₂Si₂O₆, and other silicates where M is a counterion having an oxidation state of +2. For example, the silicate M₂Si₂O₆ can include Mg₂Si₂O₆, Mg/CaSi₂O₆, MgCuSi₂O₆, Cu₂Si₂O₆, Cu/ZnSi₂O₆, or other suitable combination of counterions. The silicates described herein are not limited to counterions having a +2 oxidation state. Other silicate counterions can also be used to prepare other suitable near-infrared pigments.

### Other Fluid Agents

In some examples, the three-dimensional printing kit(s) or method of three-dimensional printing can further include other fluid agents, such as coloring agent(s), detailing agent, or the like. A coloring agent, for example, may include an aqueous liquid vehicle and a colorant, e.g., a dye and/or pigment. A detailing agent, on the other hand, may include a detailing compound capable of cooling the polymeric build material upon application. In some examples, the detailing agent can be printed around the edges of the portion of a polymeric build material that is or can be printed with the fusing agent. The detailing agent can increase selectivity between the fused and un-fused portions of the polymeric build material by reducing the temperature of the polymeric build material around the edge of the portion to be fused. In other examples, the detailing agent can be printed in areas where the fusing agent is printed to provide additional cooling when printing a three-dimensional object. In some examples, the detailing agent can exclude dihydrazide.

In further detail regarding the detailing agent, the detailing compound can be or include a solvent that can evaporate at the temperature of the polymeric build material supported on the powder bed or build platform. For example, in some cases, the polymeric build material in the powder bed can be preheated to a preheat temperature within about 10 °C to about 70 °C of the fusing temperature of the polymeric build material. In other examples, the detailing compound can provide cooling as the temperature is brought above the preheat temperature due to application of electromagnetic energy applied to the fusing agent (applied to the polymeric build material). Thus, the detailing agent can be a solvent that evaporates upon contact with the polymeric build material at the preheat temperature and/or fusing temperature, thereby cooling the printed portion through evaporative cooling. In certain examples, the detailing agent can be or include water, organic co-solvents, or combinations thereof, as the detailing compound. In further examples, the detailing agent can be substantially devoid of radiation absorbers. That is, in some examples, the detailing agent can be substantially devoid of ingredients that absorb enough energy from the energy source to cause the polymeric build material to fuse. In certain examples, the detailing agent can include colorants such as dyes or pigments, but in small enough amounts such that the colorants do not cause the polymeric build material printed with the detailing agent to fuse when exposed to the energy source.

### Aqueous Liquid Vehicle

As used herein, the term "aqueous liquid vehicle" may refer to the liquid in the fusing agent, the fluid recycling agent, and/or other fluid agents that may be present, e.g., detailing agent, coloring agent, etc. The aqueous liquid vehicle may include water alone or in combination with a variety of additional components. The aqueous liquid vehicle may be water, or may include water and organic co-solvent, for example. Examples of components that may be included, in addition to water, may include organic co-solvent, surfactant, buffer, antimicrobial agent, anti-kogation agent, chelating agent, buffer, etc. In an example, the aqueous liquid vehicle can include water and organic co-solvent. In another example, the aqueous liquid vehicle can include water, organic co-solvent, and a surfactant. In yet another example, the aqueous liquid vehicle can include water, organic co-solvent, surfactant, and buffer (or buffer and a chelating agent).

The aqueous liquid vehicle can include water that may be deionized, for example. In one example, water can be present in the fusing agent, the detailing agent, the fluid recycling agent, or other fluid agent at a weight percentage that can vary from about 25 wt% to about 94 wt%, from about 60 wt% to about 94 wt% water, or from about 30 wt% to about 75 wt% water.

The aqueous liquid vehicle may include organic co-solvent(s). Some examples of co-solvent that may be added to the aqueous liquid vehicle can include 1-(2-hydroxyethyl)-2-pyrollidinone, 2-pyrrolidinone, 2-methyl-1,3-propanediol, 1,5-pentanediol, triethylene glycol, tetraethylene glycol, 1,6-hexanediol, tripropylene glycol methyl ether, ethoxylated glycerol-1 (LEG-1), or a combination thereof. In one example, the co-solvent can include 2-pyrrolidonone. Whether a single co-solvent is included or a combination of co-solvents are included, the total amount of co-solvent(s) in the fusing agent, the detailing agent, the fluid recycling agent, or other fluid agent can be from about 5 wt% to about 60 wt%, from about 10 wt% to about 50 wt%, from about 15 wt% to about 45 wt%, from about 30 wt% to about 50 wt%, or from about 5 wt% to about 35 wt%, based on a total weight percentage of the fluid agent.

The aqueous liquid vehicle may also include surfactant. The surfactant can include a non-ionic surfactant, a cationic surfactant, and/or an anionic surfactant. In one example, the fluid agent can include an anionic surfactant. In another example, the fluid agent can include a non-ionic surfactant. In still another example, the fluid agent can include a blend of both anionic and non-ionic surfactant. Example non-ionic surfactants that can be used include self-emulsifiable, nonionic wetting agent based on acetylenic diol chemistry (e.g., SURFYNOL^{®} SEF from Air Products and Chemicals, Inc., USA), a fluorosurfactant (e.g., CAPSTONE^{®} fluorosurfactants from DuPont, USA), or a combination thereof. In other examples, the surfactant can be an ethoxylated low-foam wetting agent (e.g., SURFYNOL^{®} 440, SURFYNOL^{®} 465, or SURFYNOL^{®} CT-111 from Air Products and Chemical Inc., USA) or an ethoxylated wetting agent and molecular defoamer (e.g., SURFYNOL^{®} 420 from Air Products and Chemical Inc., USA). Still other surfactants can include wetting agents and molecular defoamers (e.g., SURFYNOL^{®} 104E from Air Products and Chemical Inc., USA), alkylphenylethoxylates, solvent-free surfactant blends (*e.g.,* SURFYNOL^{®} CT-211 from Air Products and Chemicals, Inc., USA), water-soluble surfactant (e.g., TERGITOL^{®} TMN-6, TERGITOL^{®} 15S7, and TERGITOL^{®} 15S9 from The Dow Chemical Company, USA), or a combination thereof. In other examples, the surfactant can include a non-ionic organic surfactant (*e.g.,* TEGO^{®} Wet 510 from Evonik Industries AG, Germany), a non-ionic secondary alcohol ethoxylate (*e.g.,* TERGITOL^{®} 15-S-5, TERGITOL^{®} 15-S-7, TERGITOL^{®} 15-S-9, and TERGITOL^{®} 15-S-30 all from Dow Chemical Company, USA), or a combination thereof. Example anionic surfactants can include alkyldiphenyloxide disulfonate (e.g., DOWFAX^{®} 8390 and DOWFAX^{®} 2A1 from The Dow Chemical Company, USA), and oleth-3 phosphate surfactant (e.g., CRODAFOS^{™} N3 Acid from Croda, UK). Example cationic surfactants that can be used can include dodecyltrimethylammonium chloride, hexadecyldimethylammonium chloride, or a combination thereof. In some examples, the surfactant (which may be a blend of multiple surfactants) may be present in the fusing agent, the detailing agent, the fluid recycling agent, or other fluid agent at an amount ranging from about 0.01 wt% to about 2 wt%, from about 0.05 wt% to about 1.5 wt%, or from about 0.01 wt% to about 1 wt%.

In some examples, the aqueous liquid vehicle may further include a chelating agent, an antimicrobial agent, a buffer, or a combination thereof. While the amount of these may vary, if present, these can be present in the fusing agent, the detailing agent, the fluid recycling agent, or other fluid agent at a total amount ranging from about 0.001 wt% to about 20 wt%, from about 0.05 wt% to about 10 wt%, or from about 0.1 wt% to about 5 wt%.

The aqueous liquid vehicle may include a chelating agent. Chelating agent(s) can be used to minimize or to eliminate the deleterious effects of heavy metal impurities. Examples of suitable chelating agents can include disodium ethylenediaminetetraacetic acid (EDTA-Na), ethylene diamine tetra acetic acid (EDTA), and methyl-glycinediacetic acid (e.g., TRILON^{®} M from BASF Corp., Germany). If included, whether a single chelating agent is used or a combination of chelating agents is used, the total amount of chelating agent(s) in the fusing agent, the detailing agent, the fluid recycling agent, or other fluid agent may range from 0.01 wt% to about 2 wt% or from about 0.01 wt% to about 0.5 wt%.

The aqueous liquid vehicle may also include antimicrobial agents. Antimicrobial agents can include biocides and fungicides. Example antimicrobial agents can include the NUOSEPT^{®}, Ashland Inc. (USA), VANCIDE^{®} (R.T. Vanderbilt Co., USA), ACTICIDE^{®} B20 and ACTICIDE^{®} M20 (Thor Chemicals, U.K.), PROXEL^{®} GXL (Arch Chemicals, Inc.. USA), BARDAC^{®} 2250, 2280, BARQUAT^{®} 50-65B, and CARBOQUAT^{®}250-T, (Lonza Ltd. Corp., Switzerland), KORDEK^{®} MLX (The Dow Chemical Co., USA), and combinations thereof. In an example, if included, the total amount of antimicrobial agents in the fusing agent, the detailing agent, the fluid recycling agent, or other fluid agent can range from about 0.01 wt% to about 1 wt%.

In some examples, aqueous liquid vehicle may further include buffer solution(s). In some examples, the buffer solution(s) can withstand small changes (e.g., less than 1) in pH when small quantities of a water-soluble acid or a water-soluble base are added to a composition containing the buffer solution(s). The buffer solution(s) can have pH ranges from about 5 to about 9.5, or from about 7 to about 9, or from about 7.5 to about 8.5. In some examples, the buffer solution(s) can include a poly-hydroxy functional amine. In other examples, the buffer solution(s) can include potassium hydroxide, 2-[4-(2-hydroxyethyl) piperazin-1-yl] ethane sulfonic acid, 2-amino-2-(hydroxymethyl)-1,3-propanediol (TRIZMA^{®} sold by Sigma-Aldrich, USA), 3-morpholinopropanesulfonic acid, triethanolamine, 2-[bis-(2-hydroxyethyl)-amino]-2-hydroxymethyl propane-1,3-diol (bis tris methane), N-methyl-D-glucamine, N,N,N'N'-tetrakis-(2-hydroxyethyl)-ethylenediamine and N,N,N'N'-tetrakis-(2-hydroxypropyl)-ethylenediamine, beta-alanine, betaine, or mixtures thereof. In yet other examples, the buffer solution(s) can include 2-amino-2-(hydroxymethyl)-1,3-propanediol (TRIZMA^{®} sold by Sigma-Aldrich, USA), beta-alanine, betaine, or mixtures thereof. The buffer solution, if included, can be added in the fusing agent, the detailing agent, the fluid recycling agent, or other fluid agent at an amount ranging from about 0.01 wt% to about 10 wt%, from about 0.1 wt% to about 7.5 wt%, or from about 0.05 wt% to about 5 wt%.

### Definitions

It is noted that, as used in this specification and the appended claims, the singular forms "a," "an," and "the" include plural referents unless the content clearly dictates otherwise.

The term "about" as used herein, when referring to a numerical value or range, allows for a degree of variability in the value or range, for example, within 10%, or, in one aspect within 5%, of a stated value or of a stated limit of a range. The term "about" when modifying a numerical range is also understood to include as one numerical subrange a range defined by the exact numerical value indicated, e.g., the range of about 1 wt% to about 5 wt% includes 1 wt% to 5 wt% as an explicitly supported sub-range.

As used herein, "kit" can be synonymous with and understood to include a plurality of multiple components where the different components can be separately contained (though in some instances co-packaged in separate containers) prior to use, but these components can be combined together during use, such as during the three-dimensional object build processes described herein. The containers can be any type of a vessel, box, or receptacle made of any material.

As used herein, "applying" when referring to a fluid agent that may be used, for example, refers to any technology that can be used to put or place the fluid, e.g., fusing agent, fluid recycling agent, detailing agent, coloring agent, or the like on the polymeric build material or into a layer of polymeric build material for forming a three-dimensional object. For example, "applying" may refer to a variety of dispensing technologies, including "jetting," "ejecting," "dropping," "spraying," or the like.

As used herein, "jetting" or "ejecting" refers to fluid agents or other compositions that are expelled from ejection or jetting architecture, such as ink-jet architecture. Ink-jet architecture can include thermal or piezoelectric architecture. Additionally, such architecture can be configured to print varying drop sizes such as up to about 20 picoliters, up to about 30 picoliters, or up to about 50 picoliters, etc. Example ranges may include from about 2 picoliters to about 50 picoliters, or from about 3 picoliters to about 12 picoliters.

As used herein, a plurality of items, structural elements, compositional elements, and/or materials may be presented in a common list for convenience. However, these lists should be construed as though the individual member of the list is identified as a separate and unique member. Thus, no individual member of such list should be construed as a *de facto* equivalent of any other member of the same list based on presentation in a common group without indications to the contrary.

Concentrations, dimensions, amounts, and other numerical data may be presented herein in a range format. It is to be understood that such range format is used merely for convenience and brevity and should be interpreted flexibly to include the numerical values explicitly recited as the limits of the range, as well as to include all the individual numerical values or sub-ranges encompassed within that range as the individual numerical value and/or sub-range is explicitly recited. For example, a weight ratio range of about 1 wt% to about 20 wt% should be interpreted to include the explicitly recited limits of 1 wt% and 20 wt% and to include individual weights such as about 2 wt%, about 11 wt%, about 14 wt%, and sub-ranges such as about 10 wt% to about 20 wt%, about 5 wt% to about 15 wt%, etc.

### EXAMPLES

The following illustrate examples of the present disclosure. Numerous modifications and alternative compositions, methods, and systems may be devised without departing from the present disclosure. The appended claims are intended to cover such modifications and arrangements.

### Example 1 - Preparation of Three-Dimensional Objects

Six three-dimensional objects were prepared in the shape of dog bones (or barbells) using polymeric build materials and an injection molding process. Since the polymeric build material can include a dihydrazide in some examples, adipic dihydrazide was added to the polymeric build material for comparison purposes against polymeric build materials that did not include this additive to see if the dihydrazide had an adverse impact on mechanical properties. More specifically, "Sample" polymeric build materials (Sample A-C) all included 0.3 wt% adipic acid dihydrazide admixed with 99.7 wt% nylon-12 particles. On the other hand, "Control" polymeric build materials (Control A-C) all included 100 wt% nylon-12 (polyamide-12) particles. For the various samples and control materials, the dog bone objects formed had an elongated middle section flanked by two end sections. All of the dog bone objects (molded from Control A-C and Sample A-C) were heated at 175 °C at 20 hours and mechanical properties were analyzed. The dog bone objects were evaluated for stiffness (Young's Modulus), which is measured in megapascals (MPa), as well as for ultimate tensile strength (UTS), also measured in MPa. The testing was performed by gripping the end sections of the dog bone objects and providing stress or force related to the pulling apart of the two ends and stressing the middle portion using an Instron tensiometer with a pull rate of 500 mm per minute. The results of the mechanical properties testing is shown in Table 1 below.

**Table 1: Mechanical Properties**

| **Three-dimensional Object** | **Stress at Yield (MPa)** | **Tensile Stress at Maximum Load (MPa)** | **Young's Modulus (MPa)** | **% Strain at Yield** | **% Strain at Break** |
|---|---|---|---|---|---|
| Control A | 61.747 | 61.747 | 2008.292 | 12.97 | 86.25 |
| Control B | 61.814 | 61.814 | 2148.965 | 11.04 | 11.07 |
| Control C | 35.262 | 35.262 | 1658.361 | - | 2.39 |
| Sample A | 57.685 | 57.685 | 1976.9518 | 13.18 | 244.9 |
| Sample B | 57.914 | 57.914 | 2062.5406 | 13.38 | 316.42 |
| Sample C | 58.012 | 58.012 | 2105.3225 | 12.93 | 337 |

As evidenced in Table 1, adding apidic acid dihydrazide to the polymeric build material had a relatively neutral impact on the overall mechanical properties of the three-dimensional object, and in some instances, there was actually improvement. Thus, using the dihydrazide to refresh polymeric build material may not negatively impact the polymeric build material, while providing better recyclability properties of unused powder during the build process. With respect to Control Sample C, it appears that the polymeric build material sat too long before use. This sample may be illustrative of some of the longevity issues that can be associated with the use of polymeric build materials for three-dimensional printing.

As a note, though this example was carried out using injection molding, in accordance with the present disclosure, similar three-dimensional objects can likewise be printed using a fusing agent in an additive manufacturing process. The fusing agent can include, for example, components such as organic co-solvent, e.g., 2-pyrrolidone, triethylene glycol, etc.; surfactant; radiation absorber, e.g., carbon black, etc., as described herein.

### Example 2 - Aging Study Using Solution Viscosity

An aging study was conducted to determine the effect of adding adipic acid dihydrazide to nylon-12 powder. The aging study tracked solution viscosity over various time intervals to predict the recyclability ratio of polymeric build materials in three-dimensional printing. Three polymeric build material samples were prepared to measure the various solution viscosities. For this study, a Control D polymeric build material included 100 wt% nylon-12 particles. A Sample D polymeric build material included 0.1 wt% adipic acid anhydride with 99.9 wt% nylon-12 particles; and a Sample E polymeric build material included 0.2 wt% adipic acid anhydride with 99.8 wt% nylon-12 particles as the polymeric build material. All of the various polymeric build materials were aged at 170°C for 20 hours, 40 hours, 64 hours, and 80 hours and then about 0.5 wt% (+/- 0.01) of the respective polymeric build materials was dissolved in M-cresol. Once the polymeric build materials were completely dissolved in the m-cresol solutions, the dissolved compositions were loaded into a Cannon mini PV-HX viscometer, which measured the time it took for the respective dissolved samples to travel a distance of about 6 cm, which provided the relative viscosities shown in FIG. 4. As indicated, the graph shows that the relative viscosity of both Samples D and E increased over the initial viscosity and was maintained at an increased relative viscosity with respect to their respective initial viscosities for a longer duration than Control D. The ability to maintain a solution viscosity value equal to or greater than the fresh material value over multiple generations is conducive of mitigating job to job variation in mechanical properties of three-dimensional objects printed therefrom; thereby, indicating an increase in the lifetime of the polymeric build materials.

### Example 3 - Solution Viscosity Study

Polymeric build materials were tested for solution viscosity. The "Control" polymeric build materials (Control E-G) all included 100 wt% nylon-12 (polyamide-12) particles. The "Sample" polymeric build materials (Sample F-H) all included 0.1 wt% adipic acid dihydrazide admixed with 99.7 wt% nylon-12 particles. About 0.5 wt% (+/-0.01) of the respective polymeric build materials was dissolved in M-cresol. To carry out the solution viscosity comparison, the polymeric build materials were completely dissolved in the m-cresol solutions and the dissolved compositions were either loaded into a Cannon mini PV-HX viscometer or aged as indicated below followed by being loaded into a Cannon mini PV-HX viscometer. The viscometer measured the time it took for the respective dissolved samples to travel a distance of about 6 cm, which provided the relative viscosities shown in Table 2.

**Table 2: Solution Viscosity**

| **Polymeric Build Material** | **Condition** | **Solution Viscosity** |
|---|---|---|
| Control E | Fresh | 1.880 |
| Control F | Aged 64 hours at 170°C | 2.154 |
| Control G | Admixed 90:10 used to fresh powder and Aged 64 hours at 170°C | 2.130 |
| Sample F | Fresh | 1.893 |
| Sample G | Aged 64 hours at 170°C | 2.374 |
| Sample H | Admixed 90:10 used to fresh powder and Aged 64 hours at 170°C | 2.304 |

Table 2 indicates consistently higher solution viscosity values for the polymeric build materials incorporating 0.1 wt% adipic acid dihydrazide (Samples F-H). This suggests a longer lifespan of polymeric build materials and indicates greater recyclability of these materials.

### Example 4 - Aging Study using b* (Yellowing Index) Values

An aging study was conducted to determine the effect of admixing adipic acid dihydrazide with nylon-12 powder. The aging study tracked the b* (amount of yellowing of the polymeric build material) over various time intervals which can be used to predict the recyclability ratio of polymeric build materials in three-dimensional printing. For this evaluation, two polymeric build materials were tested for oxidation or thermal degradation over time using b* values (or yellowing index value). Polymeric build material Control H included 100 wt% nylon-12 particles. Polymeric build material Sample I included 0.1 wt% apidic acid dihydrazide admixed with 99.9 wt% nylon-12 particles. Yellowing index values for the polymeric build materials were measured when fresh (initial) and following aging at 170 °C aging in air at various time intervals, e.g., 20 hours, 40 hours, 60 hours, and 80 hours. Yellow index values (before and after heating) were obtained using the ASTM D1925 method (Plastic Test Standard for Yellowing). These values are shown below in Table 3.

**Table 3: Initial b* (Yellowing Index) Values and Values Over Time**

| **Sample** | **b* Values** | | | | |
|---|---|---|---|---|---|
| | **Initial** | **20 hours** | **40 hours** | **60 hours** | **80 hours** |
| Control H | <1 | 1.3 | 4.4 | 11.9 | 16.8 |
| Sample I | <1 | 2.3 | 5.5 | 13 | 18.3 |

A lower yellow index indicates a whiter powder. The differences in yellow index values between Control H and Sample I were minimal and within acceptable limits. Thus, it appears that while adding adipic acid dihydrazide to the polymeric build material has an effect on improving mechanical properties, this enhancement can be achieved with little effect on the yellowing index value of the polymeric build material.

## Claims

1. A three-dimensional printing kit, comprising:
a polymeric build material including from about 80 wt% to 100 wt% polymer particles having an average particle size from about 10 µm to about 150 µm and from about 0.01 wt% to about 2 wt% dihydrazide, wherein the average particle size is measured using a particle analyzer using laser diffraction; and
a fusing agent formulation including an aqueous liquid vehicle and a radiation absorber.

2. The three-dimensional printing kit of claim 1, wherein the polymeric build material includes polyamide, polyethylene, polyethylene terephthalate, polystyrene, polyacrylate, polyacetal, polypropylene, polycarbonate, polyester, acrylonitrile butadiene styrene, thermoplastic polyamide, thermoplastic polyurethane, engineering plastic, polyether ketone, polyetheretherketone, polyethylene terephthalate, polybutylene terephthalate, polymer blends thereof, amorphous polymers thereof, core-shell polymers thereof, and copolymers thereof.

3. The three-dimensional printing kit of claim 1, wherein the dihydrazide is selected from adipic acid dihydrazide, sebacic acid dihydrazide, succinic dihydrazide, valine dihydrazide, dodecanedioic dihydrazide, isophthalic dihydrazide, carbohydrazide, icosanedioic acid dihydrazide, oxalyl dihydrazide, azelaic dihydrazide, terephthalic dihydrazide, or a combination thereof.

4. The three-dimensional printing kit of claim 1, wherein the dihydrazide is adipic acid dihydrazide.

5. The three-dimensional printing kit of claim 1, wherein the dihydrazide is present at from about 0.05 wt% to about 0.5 wt% in the polymeric build material.

6. The three-dimensional printing kit of claim 1, wherein the fusing agent includes about 60 wt% to about 94 wt% water, from about 5 wt% to about 35 wt% organic co-solvent, and from about 1 wt% to about 20 wt% radiation absorber, based on a total weight of the fusing agent.

7. The three-dimensional printing kit of claim 1, further comprising a detailing agent, wherein the detailing agent includes a detailing compound to reduce a temperature of the polymeric build material onto which the detailing agent is applied.

8. A method of three-dimensional printing, comprising:
admixing from about 3 wt% to about 20 wt% fresh polymeric build material with a used polymeric build material to generate refreshed polymeric build material, wherein the used polymeric build material includes from about 0.05 wt% to about 0.5 wt% dihydrazide; and
based on a three-dimensional object model, selectively fusing portions of individual layers of the refreshed polymeric build material to form a three-dimensional object by iteratively applying individual refreshed polymeric build material layers of the refreshed polymeric build material, then based on the three-dimensional object model, iteratively and selectively applying a fusing agent formulation onto the individual refreshed polymeric build material layers, the fusing agent formulation comprising an aqueous liquid vehicle and a radiation absorber, and iteratively exposing the individual refreshed polymeric build material layers with the fusing agent formulation disposed thereon to electromagnetic radiation to selectively fuse polymer particles of the refreshed polymeric build material in contact with the radiation absorber to form the fused three-dimensional object.

9. The method of claim 8, wherein the dihydrazide is added to the used polymeric build material by dry blending the dihydrazide therewith.

10. The method of claim 8, wherein the dihydrazide is added to the used polymeric build material by applying a fluid recycling agent containing the dihydrazide therewith.

11. The method of claim 8, wherein the dihydrazide is selected from adipic acid dihydrazide, sebacic acid dihydrazide, succinic dihydrazide, valine dihydrazide, dodecanedioic dihydrazide, isophthalic dihydrazide, carbohydrazide, icosanedioic acid dihydrazide, oxalyl dihydrazide, azelaic dihydrazide, terephthalic dihydrazide, or a combination thereof.

12. The method of claim 8, wherein from about 3 wt% to about 10 wt% of the fresh polymeric build material is admixed with the used polymeric build material.

13. A three-dimensional printing kit for use in the method of claim 10, comprising:
a polymeric build material including from about 80 wt% to 100 wt% polymer particles having an average particle size from about 10 µm to about 150 µm, wherein the average particle size is measured using a particle analyzer using laser diffraction;
a fusing agent formulation including an aqueous liquid vehicle and a radiation absorber; and
a fluid recycling agent including from about 0.5 wt% to about 10 wt% dihydrazide in an aqueous liquid vehicle.

14. The three-dimensional printing kit of claim 13, wherein the dihydrazide is selected from adipic acid dihydrazide, sebacic acid dihydrazide, succinic dihydrazide, valine dihydrazide, dodecanedioic dihydrazide, isophthalic dihydrazide, carbohydrazide, icosanedioic acid dihydrazide, oxalyl dihydrazide, azelaic dihydrazide, terephthalic dihydrazide, or a combination thereof.

15. The three-dimensional printing kit of claim 13, wherein the aqueous liquid vehicle of the fluid recycling agent includes from about 60 wt% to about 94 wt% water, from about 4 wt% to about 40 wt% organic co-solvent, and from about 0.01 wt% to about 2 wt% surfactant.

## Patentansprüche

1. Kit zum dreidimensionalen Drucken, umfassend:
ein polymeres Aufbaumaterial, das von etwa 80 Gew.-% bis 100 Gew.-% Polymerpartikel mit einer durchschnittlichen Partikelgröße von etwa 10 µm bis etwa 150 µm und von etwa 0,01 Gew.-% bis etwa 2 Gew.-% Dihydrazid einschließt, wobei die durchschnittliche Partikelgröße unter Verwendung eines Partikelanalysators unter Verwendung von Laserbeugung gemessen wird; und
eine Schmelzmittelformulierung, die eine wässrige flüssige Trägersubstanz und einen Strahlungsabsorber einschließt.

2. Kit zum dreidimensionalen Drucken nach Anspruch 1, wobei das polymere Aufbaumaterial Polyamid, Polyethylen, Polyethylenterephthalat, Polystyrol, Polyacrylat, Polyacetal, Polypropylen, Polycarbonat, Polyester, Acrylnitril-Butadien-Styrol, thermoplastisches Polyamid, thermoplastisches Polyurethan, technischen Kunststoff, Polyetherketon, Polyetheretherketon, Polyethylenterephthalat, Polybutylenterephthalat, Polymermischungen davon, amorphe Polymere davon, Kern-Schale-Polymere davon und Copolymere davon einschließt.

3. Kit zum dreidimensionalen Drucken nach Anspruch 1, wobei das Dihydrazid ausgewählt ist aus Adipinsäuredihydrazid, Sebacinsäuredihydrazid, Bernsteinsäuredihydrazid, Valindihydrazid, Dodecandisäuredihydrazid, Isophthalsäuredihydrazid, Carbohydrazid, Icosandisäuredihydrazid, Oxalyldihydrazid, Azelainsäuredihydrazid, Terephthalsäuredihydrazid oder einer Kombination davon.

4. Kit zum dreidimensionalen Drucken nach Anspruch 1, wobei das Dihydrazid Adipinsäuredihydrazid ist.

5. Kit zum dreidimensionalen Drucken nach Anspruch 1, wobei das Dihydrazid in dem polymeren Aufbaumaterial in einer Menge von etwa 0,05 Gew.-% bis etwa 0,5 Gew.-% vorliegt.

6. Kit zum dreidimensionalen Drucken nach Anspruch 1, wobei das Schmelzmittel von 60 Gew.-% bis etwa 94 Gew.-% Wasser, zu etwa 5 Gew.-% bis etwa 35 Gew.-% organisches Co-Lösungsmittel und von etwa 1 Gew.-% bis etwa 20 Gew.-% Strahlungsabsorber, bezogen auf das Gesamtgewicht des Schmelzmittels, einschließt.

7. Kit zum dreidimensionalen Drucken nach Anspruch 1, das ferner ein Detaillierungsmittel umfasst, wobei das Detaillierungsmittel eine Detaillierungsverbindung einschließt, um eine Temperatur des polymeren Aufbaumaterials zu reduzieren, auf das das Detaillierungsmittel aufgebracht wird.

8. Verfahren zum dreidimensionalen Drucken, umfassend:
Zumischen von etwa 3 Gew.-% bis etwa 20 Gew.-% frischem polymerem Aufbaumaterial mit einem gebrauchten polymeren Aufbaumaterial, um aufgefrischtes polymeres Aufbaumaterial zu erzeugen, wobei das gebrauchte polymere Aufbaumaterial von etwa 0,05 Gew.-% bis etwa 0,5 Gew.-% Dihydrazid einschließt; und
basierend auf einem dreidimensionalen Objektmodell, selektives Verschmelzen von Abschnitten einzelner Schichten des aufgefrischten polymeren Aufbaumaterials zur Bildung eines dreidimensionalen Objekts durch iteratives Aufbringen einzelner aufgefrischter polymerer Aufbaumaterialschichten des aufgefrischten polymeren Aufbaumaterials, dann basierend auf dem dreidimensionalen Objektmodell, iteratives und selektives Aufbringen einer Schmelzmittelformulierung auf die einzelnen aufgefrischten polymeren Aufbaumaterialschichten, wobei die Schmelzmittelformulierung eine wässrige flüssige Trägersubstanz und einen Strahlungsabsorber umfasst, und iteratives Freisetzen der einzelnen aufgefrischten polymeren Aufbaumaterialschichten mit der darauf angeordneten Schmelzmittelformulierung gegenüber elektromagnetischer Strahlung, um Polymerpartikel des aufgefrischten polymeren Aufbaumaterials in Kontakt mit dem Strahlungsabsorber selektiv zu verschmelzen, um das verschmolzene dreidimensionale Objekt zu bilden.

9. Verfahren nach Anspruch 8, wobei das Dihydrazid zu dem gebrauchten polymeren Aufbaumaterial durch Trockenmischen des Dihydrazids damit zugegeben wird.

10. Verfahren nach Anspruch 8, wobei das Dihydrazid zu dem gebrauchten polymeren Aufbaumaterial durch Aufbringen eines fluidischen Recycling-Mittels, das das Dihydrazid enthält, darauf zugegeben wird.

11. Verfahren nach Anspruch 8, wobei das Dihydrazid ausgewählt ist aus Adipinsäuredihydrazid, Sebacinsäuredihydrazid, Bernsteinsäuredihydrazid, Valindihydrazid, Dodecandisäuredihydrazid, Isophthalsäuredihydrazid, Carbohydrazid, Icosandisäuredihydrazid, Oxalyldihydrazid, Azelainsäuredihydrazid, Terephthalsäuredihydrazid oder einer Kombination davon.

12. Verfahren nach Anspruch 8, wobei von etwa 3 Gew.-% bis etwa 10 Gew.-% des frischen polymeren Aufbaumaterials dem gebrauchten polymeren Aufbaumaterial zugemischt werden.

13. Kit zum dreidimensionalen Drucken zur Verwendung in dem Verfahren nach Anspruch 10, das umfasst:
ein polymeres Aufbaumaterial, das von etwa 80 Gew.-% bis 100 Gew.-% Polymerpartikel mit einer durchschnittlichen Partikelgröße von etwa 10 µm bis etwa 150 µm einschließt, wobei die durchschnittliche Partikelgröße unter Verwendung eines Partikelanalysators unter Verwendung von Laserbeugung gemessen wird;
eine Schmelzmittelformulierung, die eine wässrige flüssige Trägersubstanz und einen Strahlungsabsorber einschließt; und
ein fluidisches Recycling-Mittel, das von etwa 0,5 Gew.-% bis etwa 10 Gew.-% Dihydrazid in einer wässrigen flüssigen Trägersubstanz einschließt.

14. Kit zum dreidimensionalen Drucken nach Anspruch 13, wobei das Dihydrazid ausgewählt ist aus Adipinsäuredihydrazid, Sebacinsäuredihydrazid, Bernsteinsäuredihydrazid, Valindihydrazid, Dodecandisäuredihydrazid, Isophthalsäuredihydrazid, Carbohydrazid, Icosandisäuredihydrazid, Oxalyldihydrazid, Azelainsäuredihydrazid, Terephthalsäuredihydrazid oder einer Kombination davon.

15. Kit zum dreidimensionalen Drucken nach Anspruch 13, wobei die wässrige flüssige Trägersubstanz des fluidischen Recycling-Mittels von etwa 60 Gew.-% bis etwa 94 Gew.-% Wasser, von etwa 4 Gew.-% bis etwa 40 Gew.-% organisches Co-Lösungsmittel und von etwa 0,01 Gew.-% bis etwa 2 Gew.-% Tensid einschließt.

## Revendications

1. Kit d'impression en trois dimensions, comprenant :
un matériau de construction polymère comportant d'environ 80 % en poids à 100 % en poids de particules de polymère ayant une taille moyenne de particules allant d'environ 10 µm à environ 150 µm et d'environ 0,01 % en poids à environ 2 % en poids de dihydrazide, dans lequel la taille moyenne de particules est mesurée à l'aide d'un analyseur de particules par diffraction laser ; et
une formulation d'agent de fusion comportant un véhicule liquide aqueux et un absorbeur de rayonnement.

2. Kit d'impression en trois dimensions selon la revendication 1, dans lequel le matériau de construction polymère comprend polyamide, polyéthylène, polyéthylène téréphtalate, polystyrène, polyacrylate, polyacétal, polypropylène, polycarbonate, polyester, acrylonitrile butadiène styrène, polyamide thermoplastique, polyuréthane thermoplastique, plastique technique, polyéthercétone, polyétheréthercétone, polyéthylène téréphtalate, polybutylène téréphtalate, leurs mélanges de polymères, leurs polymères amorphes, leurs polymères cœur-écorce et leurs copolymères.

3. Kit d'impression en trois dimensions selon la revendication 1, dans lequel le dihydrazide est choisi parmi dihydrazide d'acide adipique, dihydrazide d'acide sébacique, dihydrazide succinique, dihydrazide de valine, dihydrazide dodécanedioïque, dihydrazide isophtalique, carbohydrazide, dihydrazide d'acide icosanedioïque, dihydrazide d'oxalyle, dihydrazide azélaïque, dihydrazide téréphtalique, ou une combinaison de ceux-ci.

4. Kit d'impression en trois dimensions selon la revendication 1, dans lequel le dihydrazide est le dihydrazide d'acide adipique.

5. Kit d'impression en trois dimensions selon la revendication 1, dans lequel le dihydrazide est présent à partir d'environ 0,05 % en poids à environ 0,5 % en poids dans le matériau de construction polymère.

6. Kit d'impression en trois dimensions selon la revendication 1, dans lequel l'agent de fusion comporte 60 % en poids à environ 94 % en poids d'eau, d'environ 5 % en poids à environ 35 % en poids de cosolvant organique et d'environ 1 % en poids à environ 20 % en poids d'absorbeur de rayonnement, en fonction d'un poids total de l'agent de fusion.

7. Kit d'impression en trois dimensions selon la revendication 1, comprenant en outre un agent de détail, l'agent de détail comportant un composé de détail destiné à réduire une température du matériau de construction polymère sur lequel l'agent de détail est appliqué.

8. Procédé d'impression en trois dimensions, comprenant :
le mélange d'environ 3 % en poids à environ 20 % en poids de matériau de construction polymère frais avec un matériau de construction polymère usagé pour générer un matériau de construction polymère rafraîchi, dans lequel le matériau de construction polymère usagé comprend environ 0,05 % en poids à environ 0,5 % en poids de dihydrazide ; et
en fonction d'un modèle d'objet en trois dimensions, la fusion sélective de parties de couches individuelles du matériau de construction polymère rafraîchi pour former un objet en trois dimensions en appliquant de manière itérative des couches individuelles de matériau de construction polymère rafraîchies du matériau de construction polymère rafraîchi, puis, en fonction du modèle d'objet en trois dimensions, l'application itérative et sélective d'une formulation d'agent de fusion sur les couches individuelles de matériau de construction polymère rafraîchi, la formulation d'agent de fusion comprenant un véhicule liquide aqueux et un absorbeur de rayonnement, et l'exposition itérative des couches individuelles de matériau de construction polymère rafraîchi avec la formulation d'agent de fusion disposée sur celles-ci à un rayonnement électromagnétique pour fusionner sélectivement des particules de polymère du matériau de construction polymère rafraîchi en contact avec l'absorbeur de rayonnement pour former l'objet en trois dimensions fusionné.

9. Procédé selon la revendication 8, dans lequel le dihydrazide est ajouté au matériau de construction polymère utilisé par mélange à sec du dihydrazide avec celui-ci.

10. Procédé selon la revendication 8, dans lequel le dihydrazide est ajouté au matériau de construction polymère usagé en appliquant un agent de recyclage de fluide contenant le dihydrazide.

11. Procédé selon la revendication 8, dans lequel le dihydrazide est choisi parmi dihydrazide d'acide adipique, dihydrazide d'acide sébacique, dihydrazide succinique, dihydrazide de valine, dihydrazide dodécanedioïque, dihydrazide isophtalique, carbohydrazide, dihydrazide d'acide icosanedioïque, dihydrazide d'oxalyle, dihydrazide azélaïque, dihydrazide téréphtalique, ou une combinaison de ceux-ci.

12. Procédé selon la revendication 8, dans lequel d'environ 3 % en poids à environ 10 % en poids du matériau de construction polymère frais sont mélangés au matériau de construction polymère utilisé.

13. Kit d'impression en trois dimensions destiné à être utilisé selon le procédé selon la revendication 10, comprenant :
un matériau de construction polymère comportant d'environ 80 % en poids à 100 % en poids de particules de polymère ayant une taille moyenne de particules d'environ 10 µm à environ 150 µm, dans lequel la taille moyenne de particules est mesurée à l'aide d'un analyseur de particules par diffraction laser ;
une formulation d'agent de fusion comportant un véhicule liquide aqueux et un absorbeur de rayonnement ; et
un agent de recyclage de fluide comportant d'environ 0,5 % en poids à environ 10 % en poids de dihydrazide dans un véhicule liquide aqueux.

14. Kit d'impression en trois dimensions selon la revendication 13, dans lequel le dihydrazide est choisi parmi dihydrazide d'acide adipique, dihydrazide d'acide sébacique, dihydrazide succinique, dihydrazide de valine, dihydrazide dodécanedioïque, dihydrazide isophtalique, carbohydrazide, dihydrazide d'acide icosanedioïque, dihydrazide d'oxalyle, dihydrazide azélaïque, dihydrazide téréphtalique, ou une combinaison de ceux-ci.

15. Kit d'impression en trois dimensions selon la revendication 13, dans lequel le véhicule liquide aqueux de l'agent de recyclage de fluide comporte d'environ 60 % en poids à environ 94 % en poids d'eau, d'environ 4 % en poids à environ 40 % en poids de cosolvant organique, et d'environ 0,01 % en poids à environ 2 % en poids d'agent tensioactif.
